# EUROPEAN PATENT SPECIFICATION

(11) **EP 3 591 339 B1**
(45) Date of publication and mention of the grant of the patent: **30.08.2023**
(21) Application number: 19184387.9
(22) Date of filing: 04.07.2019
(51) Int. Cl.: G01C 21/34, G01C 21/36, G06Q 10/04

(54) **METHOD, APPARATUS, AND COMPUTER PROGRAM PRODUCT FOR GENERATION OF A ROUTE INCLUDING MULTIPLE WAYPOINTS**
VERFAHREN, VORRICHTUNG UND COMPUTERPROGRAMMPRODUKT ZUR ERZEUGUNG EINER ROUTE MIT MEHREREN WEGPUNKTEN
PROCÉDÉ, APPAREIL ET PRODUIT-PROGRAMME D'ORDINATEUR PERMETTANT DE GÉNÉRER UN ITINÉRAIRE COMPRENANT DE MULTIPLES POINTS DE CHEMINEMENT

(30) Priority: 05.07.2018 US 201816027664
(43) Date of publication of application: 08.01.2020
(73) Proprietor: HERE Global B.V., 5611 ZT Eindhoven (NL)
(72) Inventor: BECKER, Wolfgang, 60529 Frankfurt (DE); STROBECK, Knut, 60529 Frankfurt am Main (DE)
(74) Representative: Potter Clarkson

(56) References cited:
- EP-A1- 3 133 371
- WO-A1-2009/121299
- US-A1- 2011 022 313
- US-A1- 2012 059 584
- US-A1- 2013 024 112
- US-A1- 2013 166 203
- US-A1- 2014 129 139
- US-A1- 2015 338 228
- US-A1- 2017 108 348

## Description

### TECHNOLOGICAL FIELD

An example embodiment of the present invention relates to the generation of a route from an origin to a plurality of waypoints, and more particularly, to the generation of a route from an origin to a plurality of waypoints where the route and the order in which waypoints are reached is dynamically calculated based on the most recent user location and travel time along the plurality of paths to reach remaining waypoints.

### BACKGROUND

Maps have been used for centuries for providing route geometry and geographical information. Conventional paper maps including static images of roadways and geographic features from a snapshot in history have given way to digital maps presented on computers and mobile devices. Navigating a network of roads is made easier through maps, and particularly digital maps which enable a user to view their location on a map while navigating the roads. Further, route guidance may be provided by navigation systems for a use to navigate through the network of roads to reach a destination. Typically, route guidance may be provided to a user according to the shortest distance to a destination, or a fastest time to a destination. However, these routes may become congested with traffic. Navigation systems may use traffic data to determine when congestion occurs, and provide routes around the congestion, but these revised routes may then become congested from the rerouted traffic. Providing route guidance and navigation assistance to a plurality of waypoints where the order in which waypoints are reached is unimportant is a complex problem typically requiring substantial processing capacity to evaluate all available path options.

Patent application WO 2009/121299 A1 discloses a system including a GPS module, user interface module, database and routing engine. To find nearby POIs the routing engine identifies POIs in the database located within a threshold distance from the planned route in Euclidean distance. The routing engine filters the results by exploring the road network to determine whether each of the POIs is within the threshold distance of the route in driving distance.

Patent application EP 3133371 A1 discloses a one-to-many route searching method comprising searching map data to select links to form a plurality of routes from a departure node according to a cost function, and determining an extent of each route according to an objective function, wherein the searching of the map data is performed to a search boundary based upon a cost of an unreachable node.

Patent documents US 2013/024112 A1 and US 2014/129139 A1 disclose identifying a plurality of routes associated with one or more charging stations.

Patent document US 2017/108348 A1 discloses receiving an indication of an origin and a plurality of scheduled waypoints and providing route guidance along a proposed route passing through the scheduled waypoints.

Patent documents US 2012/059584 A1 and US 2013/166203 A1 disclose receiving an indication of an origin and a plurality of waypoints, initiating a generation of competing routes traveling through the plurality of waypoints, and providing route guidance for a user along a selected route.

### BRIEF SUMMARY

A method, apparatus, and computer program product are provided in accordance with appended claims 1, 6, and 7.

### BRIEF DESCRIPTION OF THE DRAWINGS

Having thus described example embodiments of the invention in general terms, reference will now be made to the accompanying drawings, which are not necessarily drawn to scale, and wherein:
FIG. 1 illustrates a communications diagram in accordance with an example embodiment of the present invention;
FIG. 2 is a block diagram of an apparatus that may be specifically configured for route planning among a plurality of waypoints accordance with an example embodiment of the present invention;
FIG. 3 illustrates a method of route planning among a plurality of waypoints;
FIG. 4 depicts a graphical illustration of routes between waypoints;
FIG. 5 illustrates the initial stage of route planning among a plurality of waypoints according to an example embodiment of the present invention;
FIG. 6 illustrates an intermediate stage of route planning among a plurality of waypoints according to an example embodiment of the present invention;
FIG. 7 illustrates an end stage of route planning among a plurality of waypoints according to an example embodiment of the present invention; and
FIG. 8 depicts a flowchart of a method for route planning among a plurality of waypoints according to an example embodiment of the present invention.

### DETAILED DESCRIPTION

Some embodiments of the present invention will now be described more fully hereinafter with reference to the accompanying drawings, in which some, but not all, embodiments of the invention are shown.

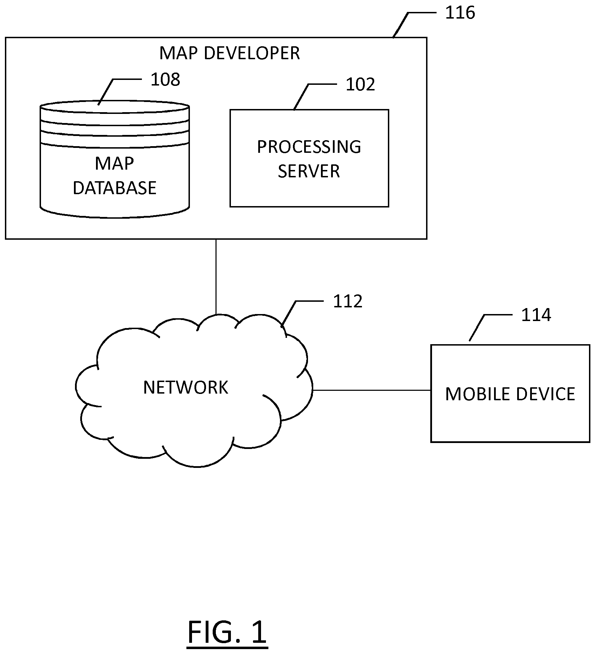

A method, apparatus, and computer program product are provided herein in accordance with an example embodiment for dynamic route planning for traveling among a plurality of waypoints. FIG. 1 illustrates a communication diagram of an example embodiment of a system for implementing example embodiments described herein. The illustrated embodiment of FIG. 1 includes a map developer system 116, a processing server 102 in data communication a geographic map database, e.g., map database 108 through a network 112, and one or more mobile devices 114. The mobile device 114 may be associated, coupled, or otherwise integrated with a vehicle, such as an in-dash vehicle navigation unit, a vehicle head unit, electronic control unit, or an advanced driver assistance system (ADAS), for example. Additional, different, or fewer components may be provided. For example, many mobile devices 114 may connect with the network 112. The map developer 116 may include computer systems and network of a system operator. The processing server 102 may include the map database 108, such as a remote map server. The network may be wired, wireless, or any combination of wired and wireless communication networks, such as cellular, Wi-Fi, internet, local area networks, or the like.

Embodiments described herein may be implemented in autonomous, semi-autonomous, or non-autonomous vehicles. Autonomous vehicles may include vehicles that are driven entirely by software and hardware components, without requiring human interaction. Non-autonomous vehicles are vehicles that have no autonomy and require a human driver to perform all driving activities. Semi-autonomous vehicles are vehicles that fall anywhere between autonomous and non-autonomous vehicles, where there is some degree of autonomy, which may include any form of driver aid such as steering assistance, acceleration/deceleration assistance, adaptive cruise control, etc. Autonomous vehicle routing may include causing the autonomous vehicle to follow a selected route among a plurality of waypoints, while a semi-autonomous or non-autonomous vehicle routing may involve providing navigational assistance or route guidance to a user to drive a vehicle along a selected route.

Processing server 102 may be one or more fixed or mobile computing devices. The mobile device 114 may be configured to access the map database 108 via the processing server 102 through, for example, a mapping application, such that the user equipment may provide navigational assistance to a user among other services provided through access to the map developer 116.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The links or roadways may be represented by polylines, where each polyline comprises a plurality of vertices establishing the path of the roadway geometry. The node data may be end points corresponding to the respective links or segments of road segment data. The road link data and the node data may represent a road network, such as used by vehicles, cars, trucks, buses, motorcycles, and/or other entities. Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POls or POI data records (such as a data point used for displaying or representing a position of a city). In addition, the map database 108 can include event data (e.g., traffic incidents, construction activities, scheduled events, unscheduled events, etc.) associated with the POI data records or other records of the map database 108.

The map database 108 may be maintained by a content provider e.g., a map developer. By way of example, the map developer can collect geographic data to generate and enhance the map database 108. According to some embodiments, the map database 108 may delegate map generation and revision to other devices, such as mobile device 114. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used to generate map geometries directly or through machine learning as described herein.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by mobile device 114, for example. The navigation-related functions can correspond to vehicle navigation, pedestrian navigation, or other types of navigation. While example embodiments described herein generally relate to vehicular travel along roads, example embodiments may be implemented for pedestrian travel along walkways, bicycle travel along bike paths, boat travel along maritime navigational routes, etc. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

As mentioned above, the server side map database 108 may be a master geographic database, but in alternate embodiments, a client side map database 108 may represent a compiled navigation database that may be used in or with end user devices (e.g., mobile device 114) to provide navigation and/or map-related functions. For example, the map database 108 may be used with the mobile device 114 to provide an end user with navigation features. In such a case, the map database 108 can be downloaded or stored on the end user device (mobile device 114) which can access the map database 108 through a wireless or wired connection, such as via a processing server 102 and/or the network 112, for example. Optionally, a portion of the map database 108, such map data regarding a specific roadway, may be downloaded or stored temporarily on an end user device, and according to various embodiments described herein, the mobile device 114 may be configured to modify the map data regarding a roadway before sending the map data back to the map database 108.

In one embodiment, the mobile device 114 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. A mobile device for navigation and map functions such as guidance and map display, for example, and for determination of one or more personalized routes or route segments based on one or more calculated and recorded routes, according to some example embodiments.

The processing server 102 may receive probe data from a mobile device 114 or a device in communication with mobile device 114. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a global positioning system (GPS), cellular tower location methods, access point communication fingerprinting, or the like. The server 102 may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) is representative of the location of a vehicle at a respective point in time and may be collected while a vehicle is traveling along a route. While probe data is described herein as being vehicle probe data, example embodiments may be implemented with pedestrian probe data, marine vehicle probe data, or non-motorized vehicle probe data (e.g., from bicycles, skate boards, horseback, etc.). According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The mobile device 114, may be any device capable of collecting the aforementioned probe data. Some examples of the mobile device 114 may include specialized vehicle mapping equipment, navigational systems, mobile devices, such as phones or personal data assistants, or the like.

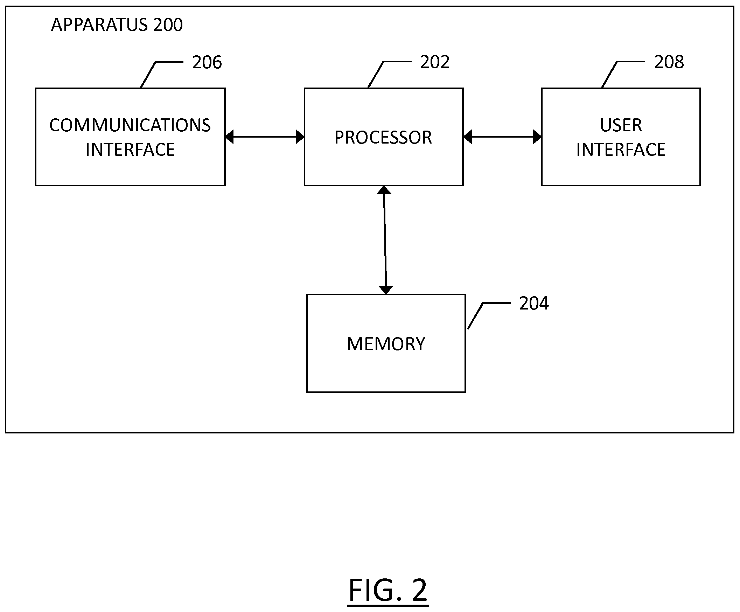

An example embodiment of a processing server 102 may be embodied in an apparatus 200 as illustrated in FIG. 2. The apparatus 200, such as that shown in FIG. 2, may be specifically configured in accordance with an example embodiment of the present invention for incrementally updating map geometry based on real-time probe data. The apparatus 200 may include or otherwise be in communication with a processor 202, a memory device 204, a communication interface 206, and a user interface 208. In some embodiments, the processor (and/or co-processors or any other processing circuitry assisting or otherwise associated with the processor) may be in communication with the memory device via a bus for passing information among components of the apparatus 200. The memory device 204 may be non-transitory and may include, for example, one or more volatile and/or non-volatile memories. In other words, for example, the memory device 204 may be an electronic storage device (for example, a computer readable storage medium) comprising gates configured to store data (for example, bits) that may be retrievable by a machine (for example, a computing device like the processor 202). The memory device 204 may be configured to store information, data, content, applications, instructions, or the like, for enabling the apparatus 200 to carry out various functions in accordance with an example embodiment of the present invention. For example, the memory device 204 could be configured to buffer input data for processing by the processor. Additionally or alternatively, the memory device 204 could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more mobile devices 114 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may, in turn, be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 204, and/or the like).

Example embodiments of the present invention may provide a mechanism for dynamic route planning, and more particularly, to generation of a route from an origin to a plurality of waypoint destinations in order to optimize a route among the waypoint destinations while iteratively updating the route calculation to ensure the most efficient and effective route is provided throughout the guidance along the route. Embodiments provided herein generate a route among a plurality of waypoint destinations and during route navigation, dynamically and iteratively determine the next route to the next waypoint during a journey among the plurality of waypoints through analysis of all options available for reaching the various remaining waypoints in set of waypoints and finding the most efficient and effective route among the remaining waypoints. In this manner, a route from a first location or origin to a first waypoint may be established based on available paths to the waypoint and considering current traffic congestion, future traffic congestion, and the next path from the first waypoint to a second waypoint in the set of waypoint destinations.

Embodiments described herein provide an efficient way of navigating through a plurality of waypoints, particularly when the order in which the waypoints are reached is not of critical importance or numerous sequences of waypoints are possible. Such routing may be beneficial to a wide variety of users, such as delivery personnel, users running errands to multiple destinations, traveling salesmen, utility service providers, or the like. Conventional route guidance and planning may consider waypoints and plan a route that reaches each waypoint. However, pre-planning a route through a plurality of waypoints may result in a user encountering traffic congestion or other unforeseen issues along the route that were not considered when the route was generated. For example, conventionally, if a plurality of waypoints are to be reached, a route may be generated from an origin, to a first waypoint, to a second waypoint, etc. until all waypoints are reached. This forms a rigid route that puts a user on a particular path despite factors influencing traffic along the path not being considered during route generation. This is particularly problematic when a stop at a waypoint may be of unknown time during route planning, where it is unknown what time the user will leave a waypoint and proceed to a subsequent waypoint. This unknown stop duration may result in a user being routed through heavy traffic congestion inadvertently. Embodiments described herein avoid such issues by dynamically calculating routes among waypoints and not adhering to a rigid order of waypoints during the routing.

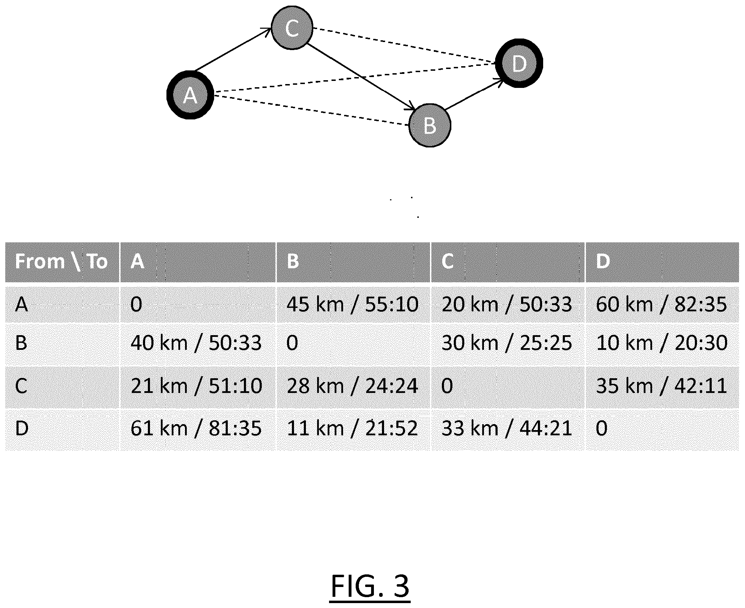

Routing of vehicles and navigational assistance of vehicles to multiple waypoints is typically performed through the establishment of the waypoints, calculating a route matrix to the plurality of waypoints, and based on the route matrix, selecting a path to reach each of the waypoints before route guidance to the first waypoint commences. A conventional route matrix is illustrated in Figure 3, which depicts The route matrix establishes a route from each of the waypoints A-D to each of the other waypoints; however, the routes are each established at the same time and even if they consider traffic, the traffic is considered at the time of generation of the route, and may not be accurate when the routes are being traversed. Further, there is only a single departure time used to calculate the routes between each pair of waypoints. As shown, the matrix provides an origin waypoint along the first column of A, B, C, and D, while a destination waypoint is featured across the first row. According to the illustrated embodiment, the distance from A-B along the available route or chosen route is 40 kilometers, and the travel time is 50 minutes, 33 seconds. The distance from B-A along the available route or chosen route, is 45 kilometers and the travel time is 55 minutes and 10 seconds. The difference may be due to different routes taken and different levels of traffic congestion at the time when the routes were evaluated.

Conventional algorithms for establishing a route reaching a plurality of waypoints computes the time and distances between pairs of waypoints as described above with respect to the matrix of Figure 3. An initial sequence of waypoints may be determined according to algorithms such as "nearest neighbor" which chooses the shortest path between waypoints to reach each waypoint, or "shortest time" which chooses the shortest trip time between waypoints as established when the matrix is created.

According to the embodiment of Figure 3, the path chosen (shown in solid arrows among the waypoints A, B, C, and D) is from A, to waypoint C, to waypoint B, to waypoint D. This results in a travel time of 51:10 from A to C, 25:25 from C to B, and 21:52 from B to D. This path avoids the long travel time of A to D and C to A or C to D, thereby providing the minimum travel time to reach all four waypoints. However, the matrix of Figure 3 uses travel times each calculated at the same time, such that the travel time from B to D may change from the originally calculated time. Assuming no or minimal stopping time at each waypoint, proceeding from A to C to B would take 76 minutes and 35 seconds. This amount of time is substantial and the traffic between waypoints B and D may change substantially within that time such that A to C to B to D would not be the most efficient route. Embodiments described herein may solve this issue by dynamically calculating the route based on the changing travel times and optimal routes between waypoints.

Embodiments described herein provide a route among a plurality of waypoints by calculating the route in a logical manner while also recalculating a route or confirming the current route is appropriate as a user is proceeding along the route. While conventional routing methods may compute unnecessary routes, such as routes from the origin waypoint to a furthest waypoint despite numerous waypoints in between, embodiments described herein avoid such calculations as waypoints that are substantially further in time or distance from an origin waypoint than other waypoints of the plurality of waypoints may be discounted as the "next up" waypoint. For example, referring again to Figure 3, if a user is beginning their route at point A, and needs to visit waypoints B, C, and D, a route to D may not be calculated as it is established that waypoint D is a predetermined distance beyond waypoints B and C, or takes above a threshold time to reach relative to waypoints B and C. The distance or travel time from A to D may not need to be calculated as it may be established that once a route reaches a predetermined distance or time from point A, that route is not viable and the route calculation may cease. Optionally, waypoint D may be discounted for routing directly from waypoint A due to waypoints B and C being between waypoints A and D.

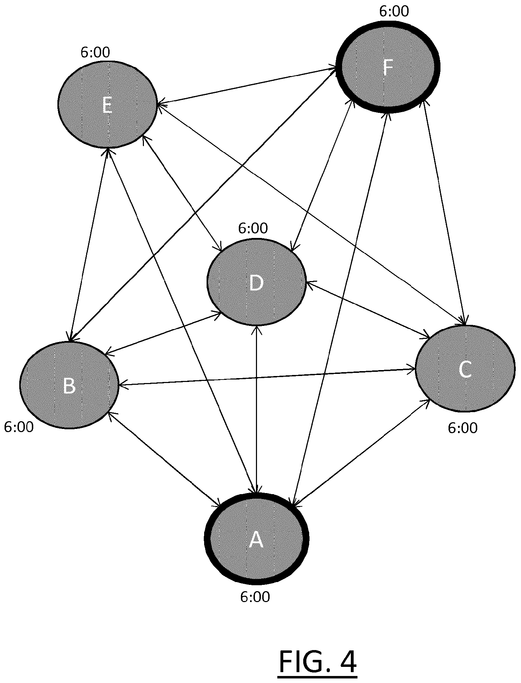

Figures 4-7 illustrate a set of waypoints A through F, where A is the origin waypoint at which the use is located or chooses to start routing from. Figure 4 illustrates a conventional routing method involving the calculation of routes and times between waypoint pairs. Such routing involves the calculation of routes that are unlikely to be traversed as there are waypoint combinations that are unreasonable or undesirable, which leads to unnecessary route calculations and inefficient use of processing resources incurring delay. Further, the routes between waypoints are evaluated based on the current time, where a departure from each waypoint is established as the current time, with the arrival at the next waypoint being based on the current travel time between the waypoints. This introduces potential erroneous routing due to travel time between waypoints changing with the passage of time and some routes becoming unviable due to traffic congestion, road closures, or the like. As shown, the departure time from each waypoint is established as 6:00am. Embodiments as illustrated in Figure 4 may be periodically updated as a user traverses a route; however, due to the highly complex nature of establishing routes between all available waypoints, the processing capacity required to update the routing among the waypoints may be prohibitively costly in terms of processing requirements, such that updates are generally not desirable.

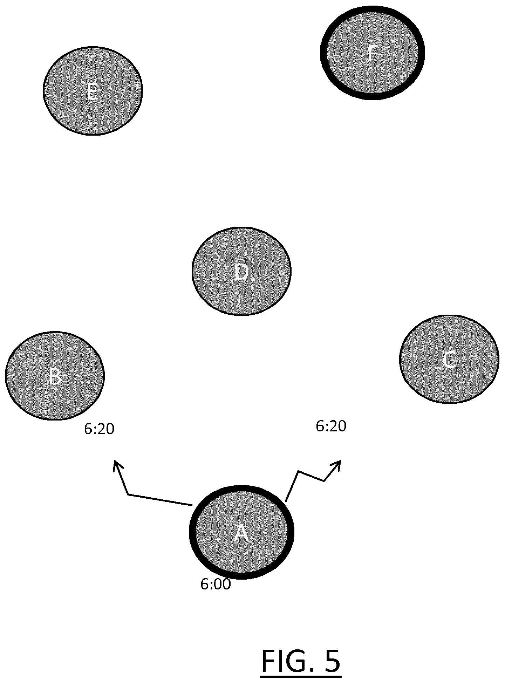

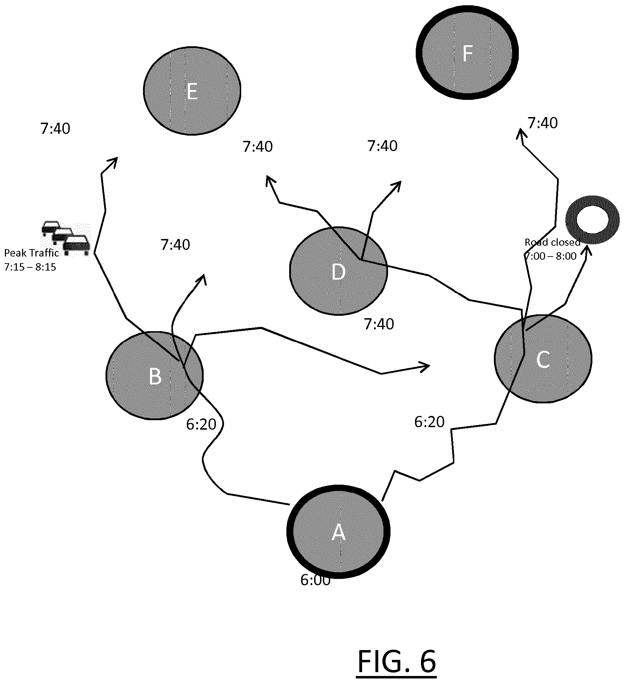

Figure 5 illustrates an example embodiment of the present invention in which a routes are calculated from the waypoint origin A to the plurality of waypoints B through F. As shown, the routes are initially calculated based on distance and travel time to waypoints proximate the origin, and the routes are searched as competing paths. While an available route from A to B may be shorter, according to the illustrated embodiment, the path is slower potentially due to traffic or slower roads (e.g., lower classes of roadways). The route emanating from waypoint A toward waypoint B may be red in color to graphically illustrate the slower speeds and/or longer travel time to waypoint B. The time shown relative to the routes represents the estimated time at which the user will reach the end of the shown routes illustrated as the arrow heads of a respective route. With a departure time of 6:00am from waypoint A, the routes will not progress very far by 6:20. Figure 6 illustrates further development of the routes emanating from waypoint A, and traveling through waypoints B and C. As shown, using the route from A to C, more progress can be made by traveling through waypoint C and through waypoint D versus traveling from waypoint A through waypoint B, where traffic may be heavy resulting in fewer waypoints being reached.

As shown in Figure 6, not all routes between all waypoints are considered. For example, a route from waypoint A to waypoint D is not evaluated. This may be due to a number of considerations. One such consideration is that there are no direct routes between A and D that would be reasonable, such as when a body of water exists between waypoints A and D without a direct path across the water. Another consideration may include a forced order of waypoints, where certain waypoint rules are implemented. Waypoint rules may include a specific order of certain waypoints, such as in a scenario in which a pick-up at one waypoint must be performed before a drop-off at another waypoint of the person or object picked-up at the prior waypoint. Waypoint rules may optionally include waypoint bonuses or penalties for certain waypoints which may influence or form a bias for particular waypoints. For example, a waypoint may include a bonus in response to a particular delivery being made or, in the instance of a taxi or ride-sharing embodiment, a fare may be picked up. A penalty for a waypoint may include when a waypoint is out of the way to a certain degree where reaching the waypoint may incur tolls on a toll road or substantial additional driving distance. In this manner, waypoint routing rules may influence the routes generated among the plurality of waypoints.

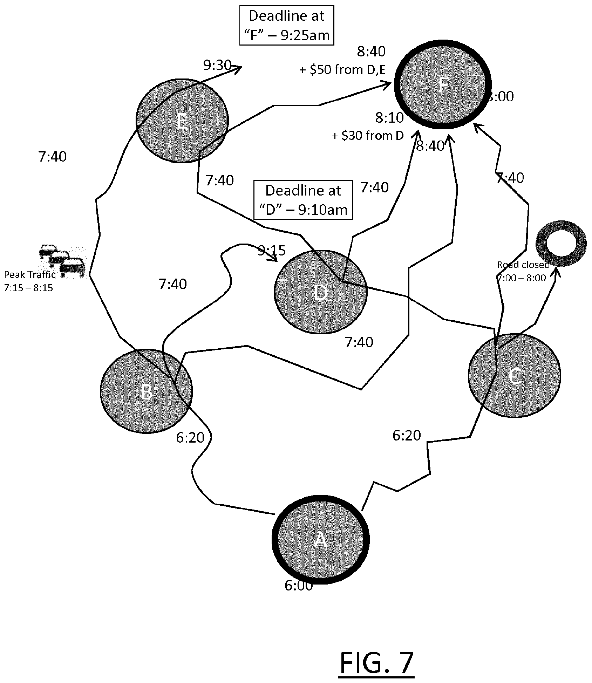

Figure 7 illustrates the further generation of routes from origin point A among the plurality of waypoints. As shown, proceeding through waypoint B limits the number of waypoints that may be reached within a predetermined amount of time. In the instant example, waypoint F includes a deadline of 9:25am to be reached, while waypoint D must be reached by 9:10am. These constraints limit the routes that may be selected. Proceeding through waypoint B results in reaching waypoint D no earlier than 9:15am, which violates the deadline of 9:1 0am. Further, reaching waypoint F through waypoint B cannot be done before the deadline of 9:25am. However, the route from A through waypoint C, to waypoint D, to waypoint E, and finally to waypoint F may satisfy the deadlines and reach the greatest number of waypoints. Further, as shown, rules may include that arriving at waypoint F by the deadline from waypoint D includes a $30 bonus, while arriving from both waypoints D and E include a $50 bonus. These bonuses may be due to people or objects picked up at waypoints D and E, and delivered to waypoint F, for example.

Also illustrated in Figure 7 are times of arrival at each waypoint as a user would travel along the route indicated. These times may help a user decide which route to take if they are presented with options, or may facilitate routing software in deciding which route is more appropriate, more profitable, or more efficient. This routing method avoids the waypoint pair matrix illustrated above in Figure 3 and substantially reduces the number of routes calculated. This reduces processing burden and latency while improving speed and efficiency of route calculations. Further, as this route calculation is more efficient and requires less processing capacity, the method may iteratively perform routing calculations as a user travels along a route to ensure they are on the most efficient, effective and/or profitable route among the plurality of waypoints.

Routing among the plurality of waypoints may consider the distance and travel time between waypoints and may optionally include rules with respect to waypoints and specific orders of certain waypoints as described above. Routing may further consider additional complexities, such as the capacity of a vehicle traveling along the route. A vehicle capacity may affect the vehicle's ability to pick up passengers or cargo objects, such that some waypoints involving the pick-up of people or cargo may not be viable until the vehicle has dropped off other people or cargo. Thus, waypoints may be associated with pick-ups and/or drop-offs, and also include a headcount of people or volume of cargo to be picked up and/or dropped off at each waypoint. Further, waypoints may be optional or mandatory such that mandatory waypoints must be traversed in a route while optional waypoints will be traversed if cost and effective and timing is conducive.

As describe above, the routing algorithms described herein propose competing paths among the plurality of waypoints, where the path generated is evaluated against other potential paths, and the most efficient and effective path is chosen. Upon a route being selected, which may be performed based on user input, automated routing algorithms, or a combination thereof, a navigation system or advanced driver assistance device may provide route guidance along the chosen route.

According to the methods described herein, routing constraints are considered during route generation such that all constraints are fulfilled during routing. Constraints may include optional/mandatory way points, open hours of a waypoint during which a user must visit, deadlines to arrive at waypoints, load capacities (people headcount, cargo volume, etc.), and inter-waypoint dependencies and orders. In addition to the constraints, the travel time and distance between waypoints may be considered to establish the most efficient and effective route may be generated. The travel time may vary due to traffic volumes or road closures. The route calculation is performed dynamically as the user is traveling among waypoints periodically and/or upon reaching each waypoint. In this manner, traffic volumes can be considered and heavy traffic may be avoided while optimizing the route among the plurality of waypoints. The routing algorithms described herein eliminates waypoints from the route in response to reaching the respective waypoints, such that further route generation is further simplified and performed with greater efficiency.

Embodiments described herein generate routes among the plurality of waypoints through competing routes, with competing route exploration done in parallel. Referring again to Figures 5-7, route explorations from origin waypoint A to waypoints B and C, and from waypoints B and C to D, E, and F, are each performed in parallel and project estimated arrival times at the respective waypoints. All route path explorations compete with one another. For example, a new link or road segment on the travel from waypoint D to E (coming from waypoint A to B to D) may be compared with whether a cheaper existing path including waypoints A to C to B to D on its way to waypoint E exists. The competition among routes may consider potential bonuses from picking-up/dropping-off points, upcoming mandatory waypoints, and waypoint penalties, for example. Route generation may prune routes or discontinue calculating a route when it is detected that the route is more costly - with respect to time, monetary cost, distance, etc. - than alternatives already found. Routing algorithms may use the cost of the route up to the road link on which a user is traveling plus an estimate of the remaining cost to the next waypoint. Route costs may be estimated across all potentially upcoming waypoints, such as using the nearest-neighbor approach.

Routing methods described herein may use additional routing heuristics to facilitate a reduction in the search space in establishing which next waypoints are to be approached. Heuristics may determine whether a remaining sequence path of mandatory waypoints get too long or if another competing path appears less costly during the generation of the routes. Further, time deadlines, order of reaching waypoints, and vehicle capacity constraints may be evaluated to confirm that they may be met, and a route may be pruned or eliminated if mandatory constraints are not met, or if a predetermined number of constraints are not met or not met within a predefined degree.

According to some embodiments, map data service providers may generate projected traffic volumes based on historical traffic volume measurements at different times of day, different days of the week, different seasons of the year, and/or during special events. Route generation methods described herein may exploit this data by evaluating routes using the projected traffic volumes along routes at the estimated time at which a user would be traversing the route. In this manner, a particular route between two waypoints may be desirable if traversed at a first time of day, but undesirable if traversed at a time when the traffic volumes are heavier.

Route generation between waypoints may be performed in a manner similar to route generation between an origin and a destination, where determining a route to the destination from the origin may be based on a current state of the traffic on the road network between the origin and destination or at a time when a user is anticipated to be traveling along that route. Routes may be generated based on an estimated travel time (e.g., selecting the lowest travel time), the most straightforward (e.g., fewest turns), the route including the most restricted-access freeways, etc.

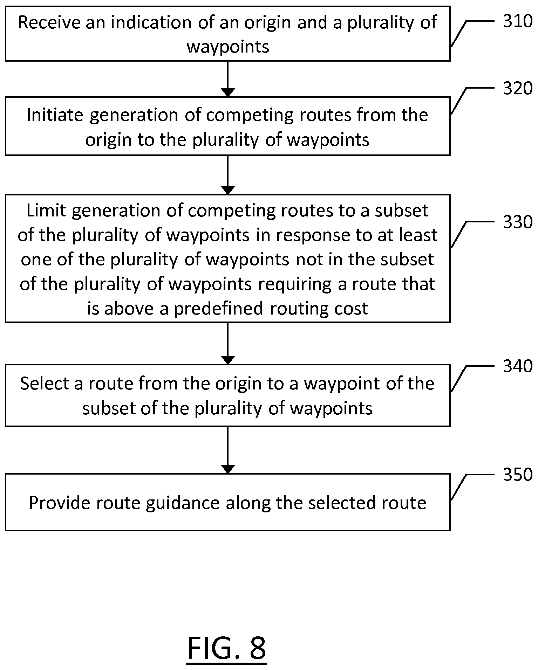

FIG. 8 illustrates a flowchart of a method according to an example embodiment of the present invention. It will be understood that each block of the flowchart and combination of blocks in the flowchart may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions that execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems that perform the specified functions, or combinations of special purpose hardware and computer instructions.

FIG. 8 illustrates a flowchart of a method according to an example embodiment of the present invention for generation of a route from an origin to a plurality of waypoints in order to optimize a route among a plurality of routes within the same network of road. As shown at 310, an indication of an origin and a plurality of waypoints is received. The waypoints may be locations for errands to be run by a user, locations for pick-up and/or drop-off of people or cargo, locations where service is needed by a service technician user, etc. At 320, generation of competing routes from the origin to the waypoints is initiated. Generation of the competing routes is limited to a subset of the plurality of waypoints in response to at least one of the waypoints that is not in the subset of the plurality of waypoints requiring a route that is above a predefined routing cost at 330. A route is selected from the origin to a waypoint of the subset of the plurality of waypoints at 340, and route guidance is provided along the selected route as shown at 350.

In an example embodiment, an apparatus for performing the method of FIG. 8 above may comprise a processor (e.g., the processor 202) configured to perform some or each of the operations (310-350) described above. The processor may, for example, be configured to perform the operations (310-350) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 310-350 may comprise, for example, the processor 202 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are possible within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. Although specific terms are employed herein, they are used in a generic and descriptive sense only and not for purposes of limitation.

## Claims

1. An apparatus (102, 200) comprising at least one processor (202) and at least one memory (204) including computer program code, the at least one memory and computer program code configured to, with the processor, cause the apparatus to at least:
receive an indication of an origin and a plurality of waypoints, including a plurality of intermediate waypoints, wherein at least some of the plurality of waypoints do not have a predefined routing order;
dynamically calculate a route and an order in which the waypoints are reached by a user by performing, for the origin and for each intermediate waypoint, the following:
initiating a generation of competing routes emanating from the origin or from the respective intermediate waypoint and traveling through the plurality of waypoints;
limiting the generation of competing routes to a subset of the plurality of waypoints, wherein the subset excludes all waypoints requiring a route, from the origin or from the respective intermediate waypoint to the excluded waypoint, above a predefined routing cost; and
selecting a route from the origin or from the respective intermediate waypoint to a waypoint of the respective subset of the plurality of waypoints;
provide route guidance for the user along the selected route; and
perform the route calculation periodically and/or upon reaching each intermediate waypoint as the user is traveling among the plurality of waypoints, wherein a waypoint is eliminated from the generation of competing routes in response to the user reaching the respective waypoint.

2. The apparatus of claim 1, wherein at least one of the waypoints includes a respective time deadline and the selected route is selected to satisfy the at least one time deadline and to reach the greatest number of waypoints.

3. The apparatus of claim 1, wherein routing cost includes one or more of travel time of the route, distance of the route, a bonus associated with an intermediate waypoint of the route, or a penalty associated with an intermediate waypoint of the route.

4. The apparatus of claim 1, wherein selecting a route to a waypoint of the respective subset of the plurality of waypoints comprises selecting a route further based on at least one of a bonus associated with the waypoint of the respective subset of the plurality of waypoints, or a penalty associated with the waypoint of the respective subset of the plurality of waypoints.

5. A mapping system (116) comprising:
the apparatus (102) of any of the preceding apparatus claims, and
a map database (108), in communication with the apparatus, comprising map data, wherein map data comprises a network of road segments and nodes between road segments.

6. A computer-implemented method comprising:
receiving (310) an indication of an origin and a plurality of waypoints, including a plurality of intermediate waypoints, wherein at least some of the plurality of waypoints do not have a predefined routing order;
dynamically calculating a route and an order in which the waypoints are reached by a user by performing, for the origin and for each intermediate waypoint, the following:
initiating (320) a generation of competing routes emanating from the origin or from the respective intermediate waypoint and traveling through the plurality of waypoints;
limiting (330) the generation of competing routes to a subset of the plurality of waypoints, wherein the subset excludes all waypoints requiring a route, from the origin or from the respective intermediate waypoint to the excluded waypoint, above a predefined routing cost; and
selecting (340) a route from the origin or from the respective intermediate waypoint to a waypoint of the respective subset of the plurality of waypoints;
providing (350) route guidance for a user along the selected route; and
performing the route calculation periodically and/or upon reaching each intermediate waypoint as the user is traveling among the plurality of waypoints, wherein a waypoint is eliminated from the generation of competing routes in response to the user reaching the respective waypoint.

7. A computer program comprising instructions which, when the program is executed by a computer, cause the computer to perform the method of claim 6.

## Patentansprüche

1. Vorrichtung (102, 200) mit mindestens einem Prozessor (202) und mindestens einem Speicher (204), der einen Computerprogrammcode enthält, wobei der mindestens eine Speicher und der Computerprogrammcode so konfiguriert sind, dass sie mit dem Prozessor die Vorrichtung veranlassen, mindestens:
eine Angabe eines Ausgangspunkts und eine Vielzahl von Wegpunkten, einschließlich einer Vielzahl von Zwischenwegpunkten, zu empfangen, wobei zumindest einige der Vielzahl von Wegpunkten keine vordefinierte Routing-Reihenfolge haben;
dynamisches Berechnen einer Route und einer Reihenfolge, in der die Wegpunkte von einem Benutzer erreicht werden, indem für den Ursprung und für jeden Zwischenwegpunkt das Folgende durchgeführt wird:
Initiieren einer Erzeugung von konkurrierenden Routen, die von dem Ursprung oder von dem jeweiligen Zwischenwegpunkt ausgehen und durch die Vielzahl von Wegpunkten verlaufen;
Begrenzen der Erzeugung konkurrierender Routen auf eine Teilmenge der Vielzahl von Wegpunkten, wobei die Teilmenge alle Wegpunkte ausschließt, die eine Route vom Ursprung oder vom jeweiligen Zwischenwegpunkt zum ausgeschlossenen Wegpunkt erfordern, die über den vordefinierten Routingkosten liegt; und
Auswählen einer Route von dem Ausgangspunkt oder von dem jeweiligen Zwischenwegpunkt zu einem Wegpunkt der jeweiligen Teilmenge der Vielzahl von Wegpunkten;
Bereitstellen einer Routenführung für den Benutzer entlang der ausgewählten Route; und
die Routenberechnung periodisch und/oder bei Erreichen jedes Zwischenwegpunktes durchführen, während der Benutzer zwischen der Vielzahl von Wegpunkten reist, wobei ein Wegpunkt aus der Erzeugung konkurrierender Routen in Reaktion auf das Erreichen des jeweiligen Wegpunktes durch den Benutzer eliminiert wird.

2. Vorrichtung nach Anspruch 1, wobei mindestens einer der Wegpunkte eine entsprechende Zeitfrist enthält und die ausgewählte Route so ausgewählt wird, dass sie die mindestens eine Zeitfrist erfüllt und die größte Anzahl von Wegpunkten erreicht.

3. Vorrichtung nach Anspruch 1, wobei die Routingkosten eines oder mehrere der folgenden Elemente umfassen: die Reisezeit der Route, die Entfernung der Route, einen mit einem Zwischenwegpunkt der Route verbundenen Bonus oder eine mit einem Zwischenwegpunkt der Route verbundene Strafe.

4. Vorrichtung nach Anspruch 1, wobei das Auswählen einer Route zu einem Wegpunkt der jeweiligen Teilmenge der Vielzahl von Wegpunkten das Auswählen einer Route auf der Grundlage von mindestens einem Bonus, der mit dem Wegpunkt der jeweiligen Teilmenge der Vielzahl von Wegpunkten verbunden ist, oder einer Strafe, die mit dem Wegpunkt der jeweiligen Teilmenge der Vielzahl von Wegpunkten verbunden ist, umfasst.

5. Ein Kartierungssystem (116), das Folgendes umfasst:
die Vorrichtung (102) nach einem der vorhergehenden Vorrichtungsansprüche, und
eine Kartendatenbank (108), die mit der Vorrichtung in Verbindung steht und Kartendaten umfasst, wobei die Kartendaten ein Netzwerk von Straßensegmenten und Knotenpunkten zwischen Straßensegmenten umfassen.

6. Computer-implementiertes Verfahren, umfassend:
Empfangen (310) einer Angabe eines Ausgangspunkts und einer Vielzahl von Wegpunkten, einschließlich einer Vielzahl von Zwischenwegpunkten, wobei zumindest einige der Vielzahl von Wegpunkten keine vordefinierte Routing-Reihenfolge haben;
dynamisches Berechnen einer Route und einer Reihenfolge, in der die Wegpunkte von einem Benutzer erreicht werden, indem für den Ursprung und für jeden Zwischenwegpunkt das Folgende durchgeführt wird:
Initiieren (320) einer Erzeugung von konkurrierenden Routen, die von dem Ursprung oder von dem jeweiligen Zwischenwegpunkt ausgehen und durch die Vielzahl von Wegpunkten verlaufen;
Begrenzen (330) der Erzeugung konkurrierender Routen auf eine Teilmenge der Vielzahl von Wegpunkten, wobei die Teilmenge alle Wegpunkte ausschließt, die eine Route vom Ursprung oder vom jeweiligen Zwischenwegpunkt zum ausgeschlossenen Wegpunkt erfordern, die über den vordefinierten Routingkosten liegt; und
Auswählen (340) einer Route von dem Ausgangspunkt oder von dem jeweiligen Zwischenwegpunkt zu einem Wegpunkt der jeweiligen Teilmenge der Vielzahl von Wegpunkten;
Bereitstellen (350) einer Routenführung für den Benutzer entlang der ausgewählten Route; und
Durchführen der Routenberechnung periodisch und/oder bei Erreichen jedes Zwischenwegpunktes, während der Benutzer zwischen der Vielzahl von Wegpunkten reist, wobei ein Wegpunkt aus der Erzeugung konkurrierender Routen in Reaktion auf das Erreichen des jeweiligen Wegpunktes durch den Benutzer eliminiert wird.

7. Computerprogramm mit Anweisungen, die, wenn das Programm von einem Computer ausgeführt wird, den Computer veranlassen, das Verfahren nach Anspruch 6 durchzuführen.

## Revendications

1. Appareil (102, 200) comprenant au moins un processeur (202) et au moins une mémoire (204) comportant un code de programme informatique, l'au moins une mémoire et le code de programme informatique étant configurés pour, avec le processeur, amener l'appareil à au moins :
recevoir une indication d'une origine et d'une pluralité de points de passage, y compris une pluralité de points de passage intermédiaires, dans lequel au moins certains de la pluralité de points de passage n'ont pas d'ordre d'itinéraire prédéfini ;
calculer dynamiquement un itinéraire et un ordre dans lequel les points de passage sont atteints par un utilisateur en effectuant, pour l'origine et pour chaque point de passage intermédiaire, ce qui suit :
le lancement d'une génération d'itinéraires concurrents émanant de l'origine ou du point de passage intermédiaire respectif et parcourant la pluralité de points de passage ;
la limitation de la génération d'itinéraires concurrents à un sous-ensemble de la pluralité de points de passage, dans lequel le sous-ensemble exclut tous les points de passage nécessitant un itinéraire, depuis l'origine ou depuis le point de passage intermédiaire respectif jusqu'au point de passage exclu, au-dessus d'un coût d'itinéraire prédéfini ; et
la sélection d'un itinéraire depuis l'origine ou depuis le point de passage intermédiaire respectif jusqu'à un point de passage du sous-ensemble respectif de la pluralité de points de passage ;
fournir un guidage d'itinéraire à l'utilisateur le long de l'itinéraire sélectionné ; et
effectuer le calcul d'itinéraire périodiquement et/ou lorsque chaque point de passage intermédiaire est atteint lorsque l'utilisateur se déplace parmi la pluralité de points de passage, dans lequel un point de passage est éliminé de la génération d'itinéraires concurrents en réponse à l'atteinte par l'utilisateur du point de passage respectif.

2. Appareil selon la revendication 1, dans lequel au moins un des points de passage comporte un délai respectif et l'itinéraire sélectionné est sélectionné pour satisfaire l'au moins un délai et pour atteindre le plus grand nombre de points de passage.

3. Appareil selon la revendication 1, dans lequel le coût d'itinéraire comporte un ou plusieurs éléments parmi le temps de trajet de l'itinéraire, la distance de l'itinéraire, un bonus associé à un point de passage intermédiaire de l'itinéraire, ou une pénalité associée à un point de passage intermédiaire de l'itinéraire.

4. Appareil selon la revendication 1, dans lequel la sélection d'un itinéraire vers un point de passage du sous-ensemble respectif de la pluralité de points de passage comprend la sélection d'un itinéraire basé en outre sur au moins un élément parmi un bonus associé au point de passage du sous-ensemble respectif de la pluralité de points de passage, ou une pénalité associée au point de passage du sous-ensemble respectif de la pluralité de points de passage.

5. Système de cartographie (116) comprenant :
l'appareil (102) selon l'une quelconque des revendications précédentes, et
une base de données cartographique (108), en communication avec l'appareil, comprenant des données cartographiques, dans lequel les données cartographiques comprennent un réseau de segments de route et de noeuds entre des segments de route.

6. Procédé mis en œuvre par ordinateur comprenant :
la réception (310) d'une indication d'une origine et d'une pluralité de points de passage, y compris une pluralité de points de passage intermédiaires, dans lequel au moins certains de la pluralité de points de passage n'ont pas d'ordre d'itinéraire prédéfini ;
le calcul dynamique d'un itinéraire et d'un ordre dans lequel les point de passage sont atteints par un utilisateur en effectuant, pour l'origine et pour chaque point de passage intermédiaire, ce qui suit :
le lancement (320) d'une génération d'itinéraires concurrents émanant de l'origine ou du point de passage intermédiaire respectif et parcourant la pluralité de points de passage ;
la limitation (330) de la génération d'itinéraires concurrents à un sous-ensemble de la pluralité de points de passage, dans lequel le sous-ensemble exclut tous les points de passage nécessitant un itinéraire, depuis l'origine ou depuis le point de passage intermédiaire respectif jusqu'au point de passage exclu, au-dessus d'un coût d'itinéraire prédéfini ; et
la sélection (340) d'un itinéraire depuis l'origine ou depuis le point de passage intermédiaire respectif jusqu'à un point de passage du sous-ensemble respectif de la pluralité de points de passage ;
la fourniture (350) d'un guidage d'itinéraire pour un utilisateur le long de l'itinéraire sélectionné ; et
la réalisation périodique du calcul d'itinéraire et/ou lorsque chaque point de passage intermédiaire est atteint lorsque l'utilisateur se déplace parmi la pluralité de points de passage, dans lequel un point de passage est éliminé de la génération d'itinéraires concurrents en réponse à l'atteinte par l'utilisateur du point de passage respectif.

7. Programme informatique comprenant des instructions qui, lorsque le programme est exécuté par un ordinateur, amènent l'ordinateur à exécuter le procédé selon la revendication 6.
